# EUROPEAN PATENT SPECIFICATION

(11) **EP 3 899 291 B1**
(45) Date of publication and mention of the grant of the patent: **29.01.2025**
(21) Application number: 19839528.7
(22) Date of filing: 17.12.2019
(51) Int. Cl.: F16B 23/00, B60B 3/14, F16B 39/282, F16B 41/00, F16B 43/00, B25B 23/00, B25B 13/06, B60B 3/16

(54) **SELF-REACTING CENTER WHEEL NUT ASSEMBLY, DRIVER ASSEMBLY, TOOL ASSEMBLY AND ASSOCIATED METHODS**
SELBSTREAGIERENDE ZENTRALRADMUTTERANORDNUNG, TREIBERANORDNUNG, WERKZEUGANORDNUNG UND ZUGEHÖRIGE VERFAHREN
ENSEMBLE D'ÉCROU DE ROUE CENTRAL À AUTO-RÉACTION, ENSEMBLE DE SERRAGE, ENSEMBLE D'OUTIL ET PROCÉDÉS ASSOCIÉS

(30) Priority: 17.12.2018 US 201862780383 P
(43) Date of publication of application: 27.10.2021
(73) Proprietor: HYTORC Division UNEX Corporation, Mahwah, NJ 07430 (US)
(72) Inventor: HULBROCK, Mark, NY 10987 (US); O'BRIEN, Patrick A., River Edge, NJ 07661 (US); JUNKERS, Eric P., Hoboken, NJ 07030 (US); JUNKERS, Jason K., Saddle River, NJ 07458 (US)
(74) Representative: Walther Bayer Faber Patentanwälte PartGmbB
(86) International application number: PCT/US2019/066997
(87) International publication number: WO 2020/131972

(56) References cited:
- WO-A1-2017/062527
- WO-A1-2018/181078
- WO-A1-97/31791
- WO-A2-2004/076203
- US-A1- 2009 160 241
- US-A1- 2017 067 501
- US-A1- 2017 122 361
- US-A1- 2018 065 411

## Description

### Background

Traditional means of fastening an automotive rim to a hub may require any number of studs/nuts in a bolt pattern repeating annularly around the center of the hub, such as that shown in FIG. C (Prior Art), referred to as B. That method is cost effective, redundant and easy to work with; however it makes installation and removal relatively slow.

An alternative method of fastening the rim to the hub is used to facilitate faster wheel changes by using a single larger nut assembly in the center of a wheel, such as that shown in FIG. B (Prior Art). The center wheel nut assembly has been used on racecars and high-end automobiles. The center wheel nut assembly requires higher and more accurate installation torque. Various versions and designs of center wheel nut assemblies for automotive rims already exist, such as that shown in FIG. A (Prior Art), a commercially available centerlock wheel nut assembly from Porsche AG ("Porsche Nut Assembly A"), as disclosed in US Design Patent No. D608,716, having Issue Date of 26 January 2010,.

Porsche Nut Assembly A includes a central nut 11A and a cone ring 4A. Central nut 11A includes a center bore 1A, trapezoidal threads 2A and a torque engagement 13A. Cone ring 4A includes a circular area 14A, bores 5A, an inner circular area 6A, a conical area 7A and an expansion slot 21A. Porsche Nut assembly A may also include: a washer 3A formed between central nut 11A and cone ring 4A; and a retaining ring 8A to hold the components together.

Porsche Nut Assembly A is assembled as shown in FIG. A. Porsche Nut Assembly A is installed on a wheel (rim) 12A as follows. An O-ring 16A and an adapter 17A are placed with in a center bore 20A of wheel 12A. An O-ring 17A is placed in and Assembled Porsche Nut Assembly A' is tightened with a standard driver (not shown) within center bore 20A. An O-ring 18A and a cap 19A are placed over Assembled Porsche Nut Assembly A'. Document US 2009/160241 A1 shows a further center wheel nut of the prior art, which wheel nut comprises a slit cone or split washer for pressing against the wheel.

Current methods of tightening center wheel nut assemblies of the prior art are difficult and prone to errors. They involve using very large, cumbersome, manual torque wrenches or torque multipliers that react on the wheel, ground or elsewhere. These tools require high physical exertion on the part of the installer making worker fatigue a real concern. Current torque multipliers need to react on the rim itself which could potentially damage the rim or the ground which may cause dangerous and unwanted side loads. Automobile brakes must be locked with an accessory to prevent unwanted tire rotation during installation. In general, complex procedures must be followed. This video link shows a common method of using a large torque wrench. See

### https://www.youtube.com/watch?v=80ccky5wSB4.

Improved center wheel nut apparatus, drivers, systems and methods are needed.

Summary The invention is a self-reacting center wheel nut assembly with the features of claim 1. An embodiment of such a self-reacting center wheel nut assembly includes: a center wheel nut; a reaction ring and a lock collar assembly. The reaction ring is formed between the center wheel nut and the lock collar assembly. The self-reacting center wheel nut assembly may also include a washer and O-rings. The self-reacting center wheel nut assembly improves and simplifies wheel bolt tightening; uses the lock collar assembly as a reaction point by transferring opposing torque generated during installation and removal through the reaction ring, which is reacted on by a dual sleeved drive assembly; may be used with HYTORC electric battery powered torque multiplier gun/tools to deliver quick, accurate and precise torque; eliminates the need for external reaction points such as the rim or ground, thereby eliminating side loads and damage to the wheel; is fully sealed and lubricated; eliminates vehicle movement and the need to lock the brakes; reduces operator fatigue and chances of injury associated with large torque wrenches; and saves operator time and energy.

### Specification

The invention(s) of the present application may be described, by way of example only, with reference to the accompanying drawings, of which:
FIGs. A-C are various views of wheel nuts and methods of the prior art;
FIGs. 1A-1E are various views of a self-reacting center wheel nut assembly 100 and/or other embodiments of the present application;

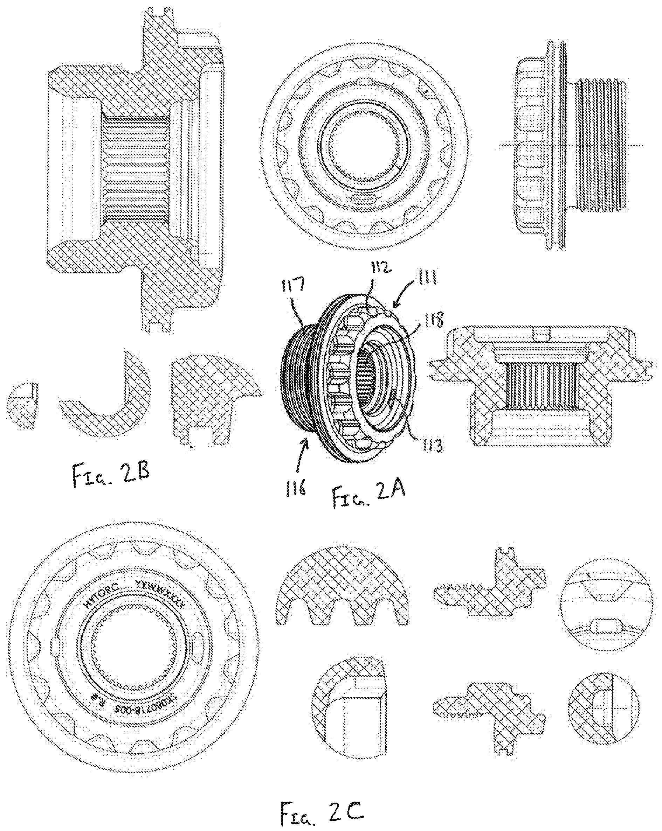

FIGs. 2A-2C are various views of a center wheel nut 110 and/or other embodiments of the present application;

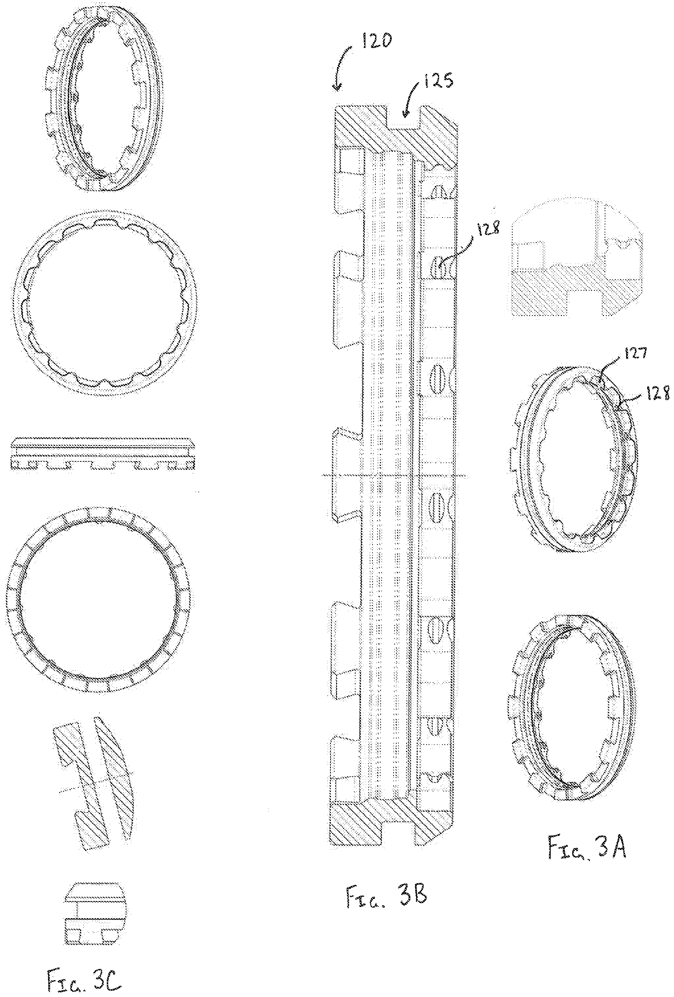

FIGs. 3A-3C are various views of a reaction ring 130 and/or other embodiments of the present application;
FIGs. 4A-4D are various views of a lock collar assembly 130 and/or other embodiments of the present application;
FIG. 5 is various views of a washer 140 and/or other embodiments of the present application;
FIGs. 6A-6E are various views of a self-reacting center wheel nut assembly 150 and/or other alternative embodiments of the present application;
FIGs. 7A-7C are various views of a self-reacting center wheel nut dual driver assembly 200 and/or other embodiments of the present application;
FIGs. 8A-8B are various views of a self-reacting center wheel nut socket 210 and/or other embodiments of the present application;
FIGs. 9A-9E are various views of a self-reacting center wheel nut reaction sleeve 220 and/or other embodiments of the present application;
FIG. 10 is a view of a system 400 for fastening objects which includes self-reacting center wheel nut assembly 100 and torque power tool 300 having self-reacting center wheel nut dual driver assembly 200; and
FIGs. 11A-11D are various views of self-reacting center wheel nut assembly 100 in operation with self-reacting center wheel nut dual driver assembly 200.

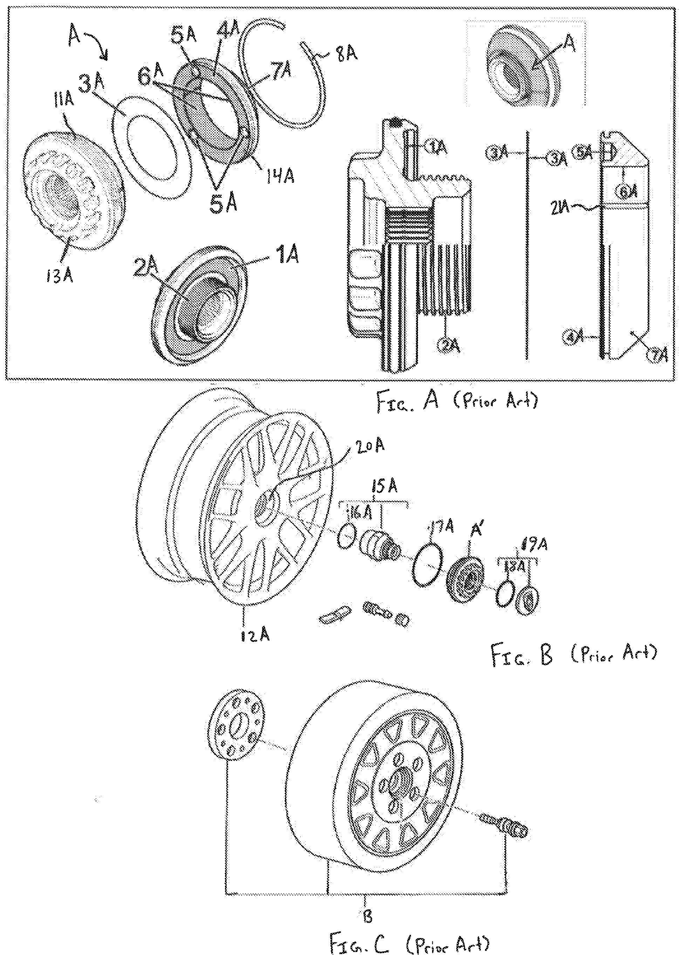

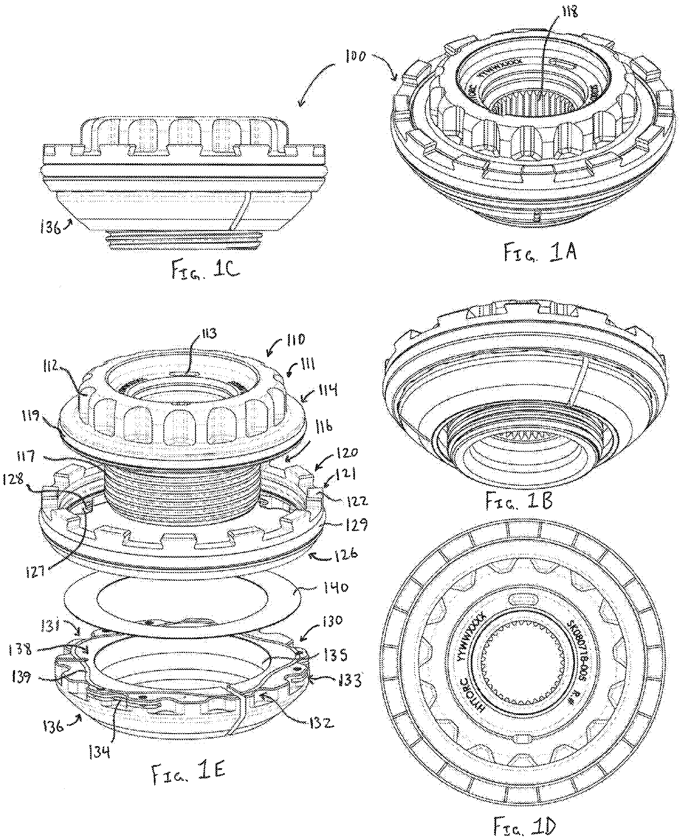

As shown in FIGs. 1A-1E, by way of example only, a self-reacting center wheel nut assembly 100 includes: a center wheel nut 110; a reaction ring 120; and a lock collar assembly 130. Reaction ring 120 is formed between center wheel nut 110 and lock collar assembly 130. Assembly 100 may also include a washer 140 and O-rings 119 and 129. Assembly 100 improves and simplifies wheel bolt tightening; uses lock collar assembly 100 as a reaction point by transferring opposing torque generated during installation and removal through reaction ring 120, which is reacted on by a dual walled drive assembly; may be used with HYTORC electric battery powered torque multiplier gun/tool to deliver quick, accurate and precise torque; eliminates the need for external reaction points such as the rim or ground, thereby eliminating side loads and damage to the wheel; is fully sealed and lubricated; eliminates vehicle movement and the need to lock the brakes; reduces operator fatigue and chances of injury associated with large torque wrenches; and saves operator time and energy.

Center wheel nut 110 is a modified version of central nut 11A of Porsche Nut Assembly A of the prior art. Center wheel nut 110 is formed as a hollow cylindrical body having a first end 111 to nonrotatably engage with an action (or torque input) portion of a driver assembly (not shown) and a second end 116 to rotatably engage with an inner threaded surface of a hollow shaft of a hub of a wheel (not shown).

First end 111 includes an outer engagement means 112 which may be formed as a polygonal formation, which in this case are radially dispersed lobes. Engagement means 112 allows for rotational coupling with the action portion of the torque input device. First end 111 also includes an inner engagement means 113 which may be formed as a polygonal formation, which in this case are indentions. Engagement means 113 allows for click-in connection with the action portion of the torque input device through the driver assembly.

Second end 116 includes an outer engagement means 117 which in this case are external threads. Engagement means 117 allows for threaded engagement with the hollow shaft of the hub of the wheel. Second end 116 also includes an inner engagement means 118 which may be formed a polygonal formation, which in this case are splines. Engagement means 118 allows for rotational coupling of a wheel adaptor (not shown) that rests within the hub of the wheel.

Center wheel nut 110 also has a flanged portion 114 formed between first end 111 and second end 116. A channel 115 around an outer edge of flanged portion 114 accepts an O-ring 119. HYTORC modified the shape and size of portion(s) of the Porsche Nut, including flanged portion 114, to accommodate for the addition of reaction ring 120. Such modification(s) does not weaken center wheel nut 110 since the portion(s) which receives compressive stress has not materially changed.

Generally, in order for center wheel nut assembly 100 to fit in the standard rim (wheel), *inter alia,* the outside diameter and/or thickness of the nut portion of the Porsche Nut is reduced. Specifically, the section of the Porsche Nut used as an O-ring seal gland and as a means to keep the tapered collet washer attached is removed. Secondary O-ring 119 is added to, *inter alia,* seal out external contaminents, seal in lubricants and act as a snap ring to keep center wheel nut 110 attached to reaction ring 120.

Reaction ring 120 is formed as a hollow cylindrical body having a first end 121 to nonrotatably engage with a reaction portion of the driver assembly and a second end 126 to nonrotatably engage with lock collar assembly 130.

First end 121 includes an upper engagement means 122 which may be formed as a polygonal formation, which in this case are radially dispersed castellations. Engagement means 122 allows for rotational coupling with the reaction portion of the torque input device through the driver assembly. The walls of the castellations are angled (dovetailed) to create a low (short) profile which would pull themselves tighter together as a moment is applied. This modification resists slipping off which would normally be a concern with such a short feature.

Second end 126 includes a lower engagement means 127 which may be formed as a polygonal formation, which in this case are radially dispersed lobes. Engagement means 127 allows for rotational coupling with lock collar assembly 130. Second end 126 also includes an inner engagement means 128 which may be formed as a polygonal formation, which in this case are indentions. Engagement means 128 allows for click-in connection with lock collar assembly 130.

Reaction ring 120 also has an outer edge 124 formed between first end 121 and second end 126. A channel 125 around outer edge 124 accepts an O-ring 129. O-ring 129 is added to, *inter alia,* seal out external contaminents, seal in lubricants and act as a snug fit with a tapered recess in the center of the wheel.

Lock collar assembly 130 is a modified version of cone ring 4A of Porsche Nut Assembly A of the prior art. Lock collar assembly 130 is formed as a hollow cylindrical tapered body having a first end 131 to nonrotatably engage with reaction ring 120 and a second end (or outer surface) 136 to engage with the tapered recess in the center of the wheel, which matches its shape. Lock collar assembly 130 also includes an inner smooth surface 135 to nonrotatably engage with an outer smooth surface of the shaft of the hub of the wheel.

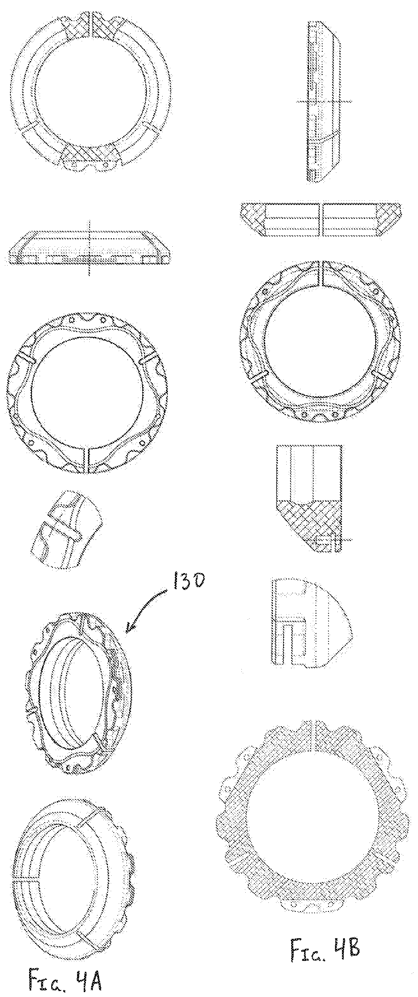

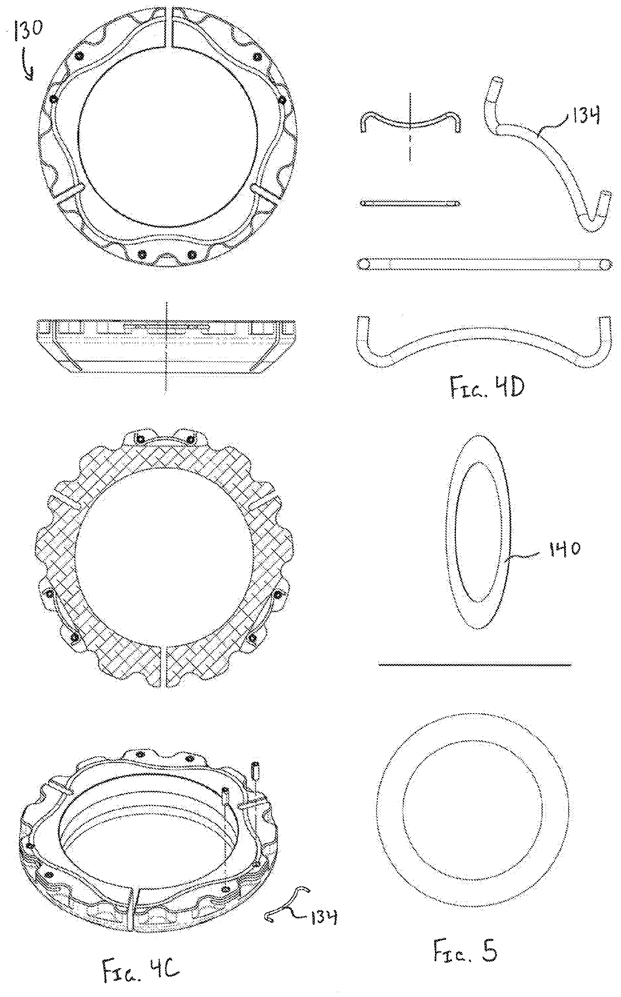

First end 131 includes an upper engagement means 132 which may be formed as a polygonal formation, which in this case are radially dispersed lobes. Engagement means 132 allows for rotational coupling with engagement means 127 of reaction ring 120. First end 131 also includes an outer engagement means 133 within portions of upper engagement means 132. As shown in FIG. 4C, by way of example only, outer engagement means may be formed as a retaining formation, which in this case are indentions with retaining springs 134 held in place by spring pins. Engagement means 133 allows for click-in connection with engagement means 128 or reaction ring 120. Second end (or outer surface) 136 engages with the tapered recess in the center of the wheel, which matches its shape.

Lock collar assembly 130 also includes a circumferential engagement means 137 which may be formed as a expansion/compression formation, which in this case are radially dispersed full and/or partial slots (or cut-outs). Engagement means 137 works in tandem with inner smooth surface 135 to nonrotatably engage with the outer smooth surface of the shaft of the hub of the wheel. Lock collar assembly 130 also may include a continuous, circuitous groove formation 139 formed on an upper surface 138.

As shown in FIG. 5, by way of example only, self-reacting center wheel nut assembly 100 may also include a smooth washer 140. Smooth washer 140 is shown formed between a smooth lower surface of flanged portion 114 of center wheel nut 110 and upper surface 138 of lock collar assembly 130. Smooth washer 140 helps to relieves friction while turning center wheel nut 110.

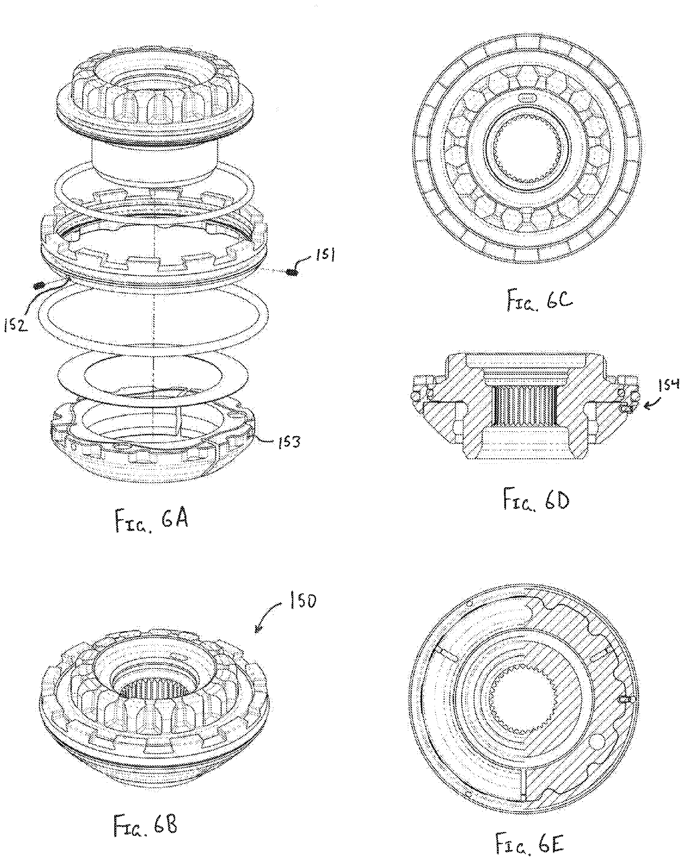

As shown in FIGs. 6A-6E, by way of example only, an alternative embodiment of self-reacting center wheel nut assembly 150 includes an engagement means 154 to nonrotatably attach the reaction ring and the lock collar assembly. In this alternative embodiment, engagement means 154 includes set screws 151 formed within bores 152 and 153 of the reaction ring and the lock collar assembly, respectively.

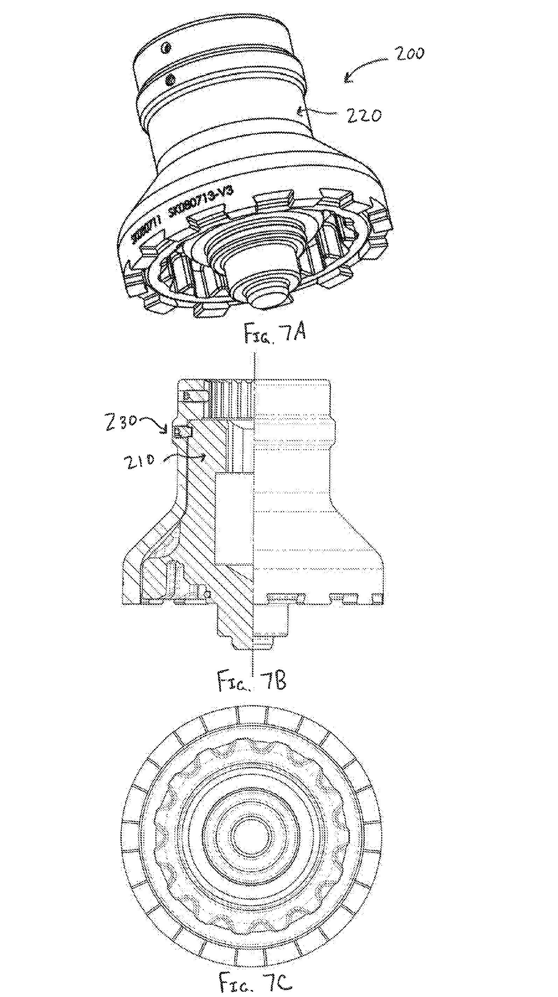

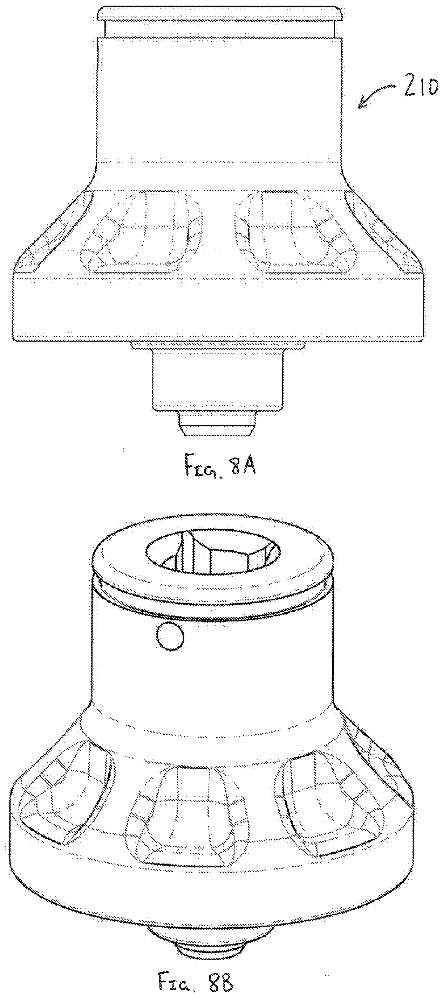

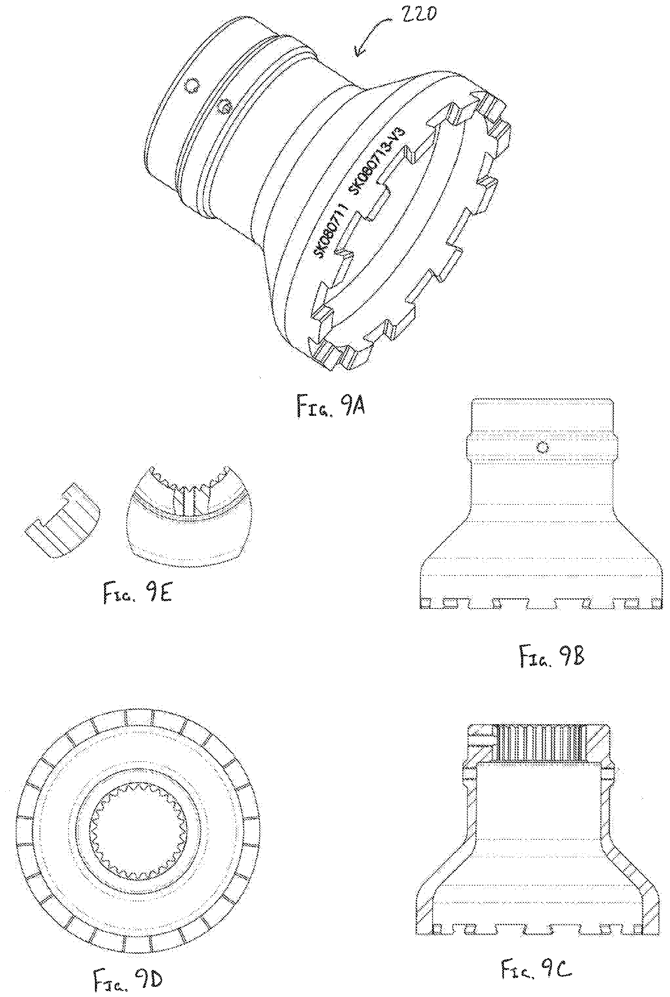

As shown in FIGs. 7A-7C, by way of example only, are various views of a self-reacting center wheel nut dual driver assembly 200 of the present application. Driver assembly 200 includes an inner self-reacting center wheel nut socket 210 and an outer self-reacting center wheel nut reaction sleeve 220 coupled together via a socket coupling means 230. Socket 210 and sleeve 220 are cooperatively and relatively rotatable in opposite directions. Note that socket 210 is a modified version of the driver of Porsche Nut Assembly A of the prior art. Socket coupling means 230, in this case, is formed as a set screws formed within a bores of sleeve 220 which rests within a channel formed on socket 210. Various views of socket 210 and sleeve 220 are shown in FIGs. 8A-8B and FIGs. 9A-9E, respectively.

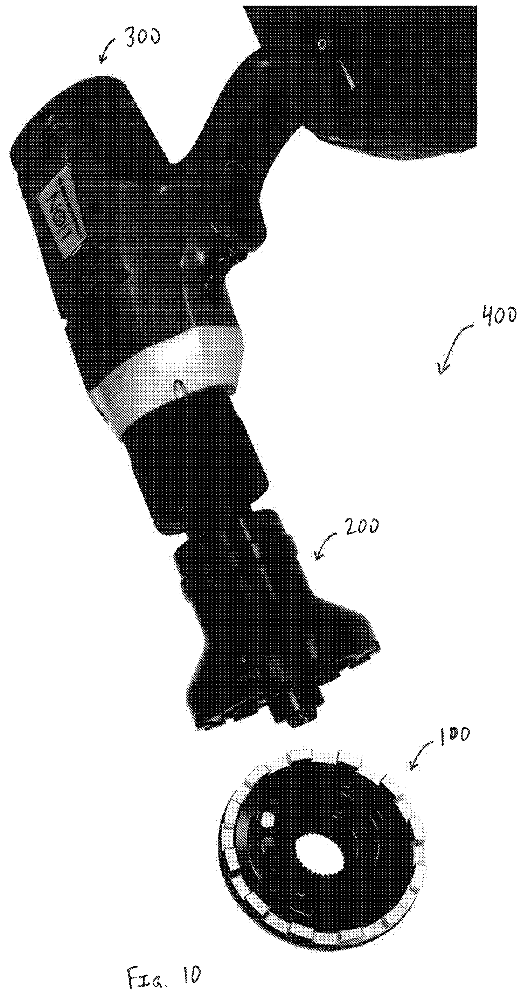

As shown in FIG. 10, by way of example only, is a reaction arm-free torque power tool 300 for either tightening, loosening or both tightening and loosening of self-reacting center wheel nut assemblies of the present application, like 100, including: a turning force generating mechanism; a drive to transfer the turning force; and a dual driver assembly of the present application, like 200. Power tool 300 may be either manually, electrically, hydraulically or pneumatically driven. Power tool 300 may include either: a HYTORC^{®} ICE^{®}; a HYTORC^{®} AVANTI^{®}; a HYTORC^{®} STEALTH^{®}; a HYTORC^{®} XXI^{®}; a HYTORC^{®} jGUN^{®}; a HYTORC^{®} FLIP-Gun^{®}, a HYTORC^{®} THRILL^{®} Gun; a HYTORC^{®} Z^{®} Gun; a HYTORC^{®} FLASH^{®} Gun; or a HYTORC^{®} Lithium Series^{®} Gun.

As shown in FIG. 10, by way of example only, a system 400 for fastening objects includes: self-reacting center wheel nut assemblies of the present application, like 100; and torque power tool 300 having a dual driver assembly of the present application, like 200.

Generally, a self-reacting center wheel nut assembly includes: a center wheel nut having a first end to nonrotatably engage with an action portion of a driver assembly and a second end to rotatably engage with a wheel; a reaction ring having a first end to nonrotatably engage with a reaction portion of a driver assembly and a second end to nonrotatably engage with the lock collar assembly; and a lock collar assembly having a first end to nonrotatably engage with the reaction ring and a second end to nonrotatably engage with the wheel.

The application includes a novel and non-obvious center wheel nut design that adds a self-reaction feature to the nut. HYTORC Reaction Washer technology is further advanced with an added part to transfer the reaction force from the centering collar behind the nut to an exposed location beside the nut tightening feature. Note that this invention could be used anywhere a collet like device is tightened to a very high torque.

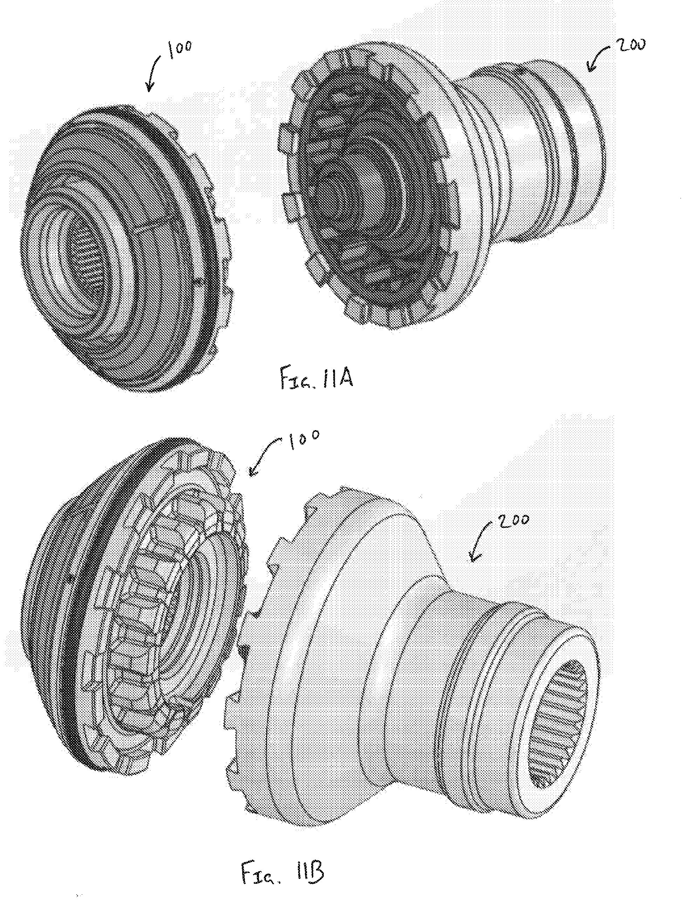

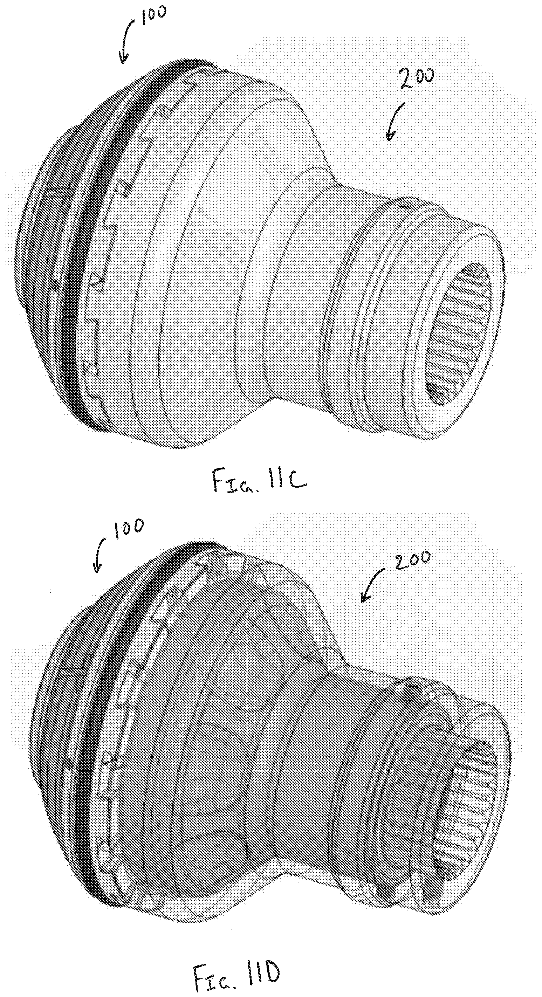

Apparatus 100 operates with driver assembly 200 as follows and as shown in FIGs. 11A-11D, by way of example only. The center wheel nut is turned clockwise and threads down onto a hollow shaft of the hub. This hub has matching threads on the inside and the outside of the hub is smooth. The tapered collet washer is split and has cuts along its outside which allow it to expand for a tight fit over the hub outside.

As the center nut is tightened, it pushes the tapered collet washer down into a matching tapered recess on the center of the rim (wheel). So as the nut is being tightened, the tapered collet washer is simultaneously putting pressure axially onto the wheel to hold it against the hub and also being squeezed tightly around the outside of the hub, keeping everything centered.

Similar to HYTORC Washer technology, apparatus 100 takes advantage of the tapered collet washer that resists turning in the opposite direction as the nut during a coaxial tightening operation.

In accordance with the invention, the reaction ring is added to apparatus 100, which allows for coaxial reaction off of the tapered collet washer, respectively of the lock washer assembly. The reaction ring and tapered collet washer are coupled rotationally by a number of reaction lobes. These lobes could just as easily be a spline, or any number of other mechanical and/or geometric means of attaching the two parts together.

PCT/US17/45937 (published as WO 2018/031566 A1) discloses, inter alia, a torque power tool for tightening and/or loosening of an industrial threaded fastener including: a motor to generate a turning force; a drive to transfer the turning force; a turning force multiplication mechanism assembly; and a yoke-style shifter assembly to shift the tool into any torque mode from lower and/or higher resistance and/or speed. PCT/US19/64561 discloses, inter alia, a portable torque power tool including: a motor to generate a turning force; a drive to transfer the turning force; a turning force multiplication mechanism assembly to multiply the turning force; a shifter assembly to shift the tool between a lower speed / higher torque (LSHT) mode and a higher speed / lower torque (HSLT) mode; a torque transducer to measure torque output from a portion of the turning force multiplication mechanism assembly; wherein torque output is controlled by the torque transducer in LSHT mode; and wherein torque output is controlled by motor current in HSLT mode.

US15/106,221, US15/106,247, US15/570,670, US15/570,684 and US15/570,743 disclose, inter alia, Applicant's HYTORC^{®} Z^{®} System which involves: tools having multispeed / multi-torque modes with torque multiplication and vibration mechanisms without use of external reaction abutments; a force transfer means to yield in-line co-axial action and reaction for use with such tools; driving means and shifting means capable of attaching to washers under the nut for use with such tools and force transfer means; associated washers and fasteners for use with such tools, force transfer means and driving means; and related accessories for use with such tools, force transfer means, driving means, washers and fasteners.

The HYTORC^{®} Z^{®} System includes the following: Z^{®} Washers located under nuts or bolt heads of various types having engageable perimeters of multiple shapes, sizes, geometries and serrations, such as washer/fastener radius engagement differentials, and frictionally biased faces with relatively higher friction against the flange surface and relatively lower friction against the nut, such as friction coefficient increasing treatment means of various types, sizes and locations; HYTORC Z^{®} Guns incorporating a powerful impact mechanism and a precise torque multiplier in the same tool combining rapid rundown with calibrated torque; HYTORC^{®} Z^{®} Sockets with dual drive coaxial action and reaction having outer sleeves to react on Z^{®} Washers and an inner sleeves to turn nuts or bolt heads; HYTORC^{®} Z^{®}Spline Adapters and Reaction Plates for backwards compatibility with HYTORC^{®}'s torque/tension systems including the AVANTI^{®} and ICE^{®} square drive systems, the STEALTH^{®} limited clearance system, the pneumatic jGUN^{®} series, the FLASH^{®} Gun and LITHIUM Series electric multipliers and more; the combination of HYTORC^{®} Z^{®} Washer and the HYTORC^{®} Z^{®} Dual Friction Washer^{™} including a dual friction-enhanced face washer and/or the HYTORC^{®} Z^{®} Nut/Bolt for counter-torque under a nut or bolt head on the other side of the joint; HYTORC^{®} Z^{®} Dual Drive Offset Links for tight clearances while using HYTORC^{®}'s torque/tension systems; HYTORC^{®} Z^{®} Vibration Mechanisms applied thereof; Z^{®}-Squirter^{®} Washers; HYTORC^{®} Z^{®} Washer and Nut Assemblies; and any combinations thereof. Further disclosures include: Tapered Fastener Assemblies; Tapered Torsional Couplings; Two-Part Tapered Nut Assemblies; and Two-Part Tapered Thread Nut Assemblies. Tool A, and variations thereof, may be used with Applicant's HYTORC^{®} Z^{®} System.

It will be understood that each of the elements described above, or two or more together, may also find a useful application in other types of constructions differing from the types described above. The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilized for realizing the invention in diverse forms thereof. Note that there may be slight differences in descriptions of numbered components in the specification.

The present invention has been generally described with reference to the accompanying figures, in the form of nut assembly 100, driver 200 and tool 300. This invention may, however, be embodied in many different forms and should not be construed as limited to the embodiments set forth herein. Like numbers refer to like elements throughout. In the figures, certain layers, components or features may be exaggerated for clarity, and broken lines illustrate optional features or operations unless specified otherwise. In addition, the sequence of operations (or steps) is not limited to the order presented in the figures and/or claims unless specifically indicated otherwise. In the drawings, the thickness of lines, layers, features, components and/or regions may be exaggerated for clarity and broken lines illustrate optional features or operations, unless specified otherwise.

The terminology used herein is for the purpose of describing particular embodiments only and is not intended to be limiting of the invention. As used herein, the singular forms, "a", "an" and "the" are intended to include the plural forms as well, unless the context clearly indicates otherwise. It will be further understood that the terms "comprises," "comprising," "includes," and/or "including" when used in this specification, specify the presence of stated features, regions, steps, operations, elements, and/or components, but do not preclude the presence or addition of one or more other features, regions, steps, operations, elements, components, and/or groups thereof.

It will be understood that when a feature, such as a layer, region or substrate, is referred to as being "on" another feature or element, it can be directly on the other feature or element or intervening features and/or elements may also be present. In contrast, when an element is referred to as being "directly on" another feature or element, there are no intervening elements present. It will also be understood that, when a feature or element is referred to as being "connected", "attached" or "coupled" to another feature or element, it can be directly connected, attached or coupled to the other element or intervening elements may be present. In contrast, when a feature or element is referred to as being "directly connected", "directly attached" or "directly coupled" to another element, there are no intervening elements present. Although described or shown with respect to one embodiment, the features so described or shown can apply to other embodiments. The term "about" refers to +/-variations of less than 20%, typically +/-10%. The term "substantially" refers to +/-variations of less than 10%, typically +/-5%.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the present application and relevant art and should not be interpreted in an idealized or overly formal sense unless expressly so defined herein.

The term "cordless" or "handheld" or "portable" power tool refers to power tools that do not require plug-in, hard wired electrical connections to an external power source to operate. Rather, the cordless power tools have electric motors that are powered by on-board batteries, such as rechargeable batteries. A range of batteries may fit a range of cordless tools. Embodiments of the present invention are particularly suitable for industrial fastening tools such as for example, screwdrivers, ratchets, and nutrunners.

Embodiments of the invention may be particularly suitable for precision industrial fastening power tools that can be used for applications where more exact control of the applied output is desired.

## Claims

1. A self-reacting center wheel nut assembly (100) including:
a center wheel nut (110);
a reaction ring (120); and
a lock collar assembly (130).
the center wheel nut (110) having a first end (111) to nonrotatably engage with an action portion of a driver assembly (200) and a second end (116) to rotatably engage with a wheel;
the reaction ring (120) having a first end (121) to nonrotatably engage with a reaction portion of a driver assembly (200) and a second end (126) to nonrotatably engage with the lock collar assembly (130); and
the lock collar assembly (130) having a first end (131) to nonrotatably engage with the reaction ring (120) and a tapered second end (136) to nonrotatably engage with a matching tapered recess in the center of a wheel.

2. A self-reacting center wheel nut assembly (100) according to any preceding claim wherein the reaction ring (120) is formed between the center wheel nut (110) and the lock collar assembly (130).

3. A self-reacting center wheel nut assembly (100) according to any preceding claim including a washer (140) formed between the center wheel nut (110) and the lock collar assembly (130).

4. A combination for fastening objects including:
- a self-reacting center wheel nut assembly (100) according to either of claim 1-3; and
- a self-reacting center wheel nut dual driver assembly (200) to tighten the self-reacting center wheel nut assembly (100), the driver assembly (200) including
o an inner self-reacting center wheel nut socket (210) and an outer self-reacting center wheel nut reaction sleeve (220), coupled together and relatively rotatable in opposite directions via a socket coupling means (230),
∘ the inner self-reacting center wheel nut socket (210) having an action portion to nonrotatably engage with the first end (111) of the center wheel nut (110) of the self-reacting center wheel nut assembly (100), and
∘ the outer self-reacting center wheel nut reaction sleeve (220) having a reaction portion to nonrotatably engage with the first end (121) of the reaction ring (120) of the self-reacting center wheel nut assembly (100).

5. A reaction arm-free torque power tool (300) for fastening a self-reacting center wheel nut assembly (100) according to either of claim 1-3, the power tool including:
a turning force generating mechanism;
a drive to transfer the turning force; and
a combination for fastening objects of claim 4.

6. A power tool (300) according to claim 5 either electrically, hydraulically or pneumatically driven.

7. A system (400) for fastening objects including:
a self-reacting center wheel nut assembly (100) according to either of claim 1-3; and
a reaction arm-free torque power tool (300) of either claim 5 to 6.

## Patentansprüche

1. Selbstreagierende zentrale Radmutteranordnung (100) mit:
einer zentrale Radmutter (110);
einem Reaktionsring (120); und
einer Sicherungsringanordnung (130); wobei
die zentrale Radmutter (110) ein erstes Ende (111), um nicht drehbar mit einem Aktionsabschnitt einer Antriebsanordnung (200) in Eingriff zu kommen,
und ein zweites Ende (116) aufweist, um drehbar mit einem Rad in Eingriff zu kommen;
der Reaktionsring (120) ein erstes Ende (121), um nicht drehbar mit einem Reaktionsabschnitt einer Antriebsanordnung (200) in Eingriff zu kommen, und ein zweites Ende (126) aufweist, um nicht drehbar mit der Sicherungsringanordnung (130) in Eingriff zu kommen; und
die Sicherungsringanordnung (130) ein erstes Ende (131), um drehfest mit dem Reaktionsring (120) in Eingriff zu kommen, und ein verjüngtes zweites Ende (136) aufweist, um drehfest mit einer passenden verjüngten Aussparung in der Mitte eines Rades in Eingriff zu kommen.

2. Selbstreagierende zentrale Radmutteranordnung (100) nach einem der vorhergehenden Ansprüche, wobei der Reaktionsring (120) zwischen der zentralen Radmutter (110) und der Sicherungsringanordnung (130) ausgebildet ist.

3. Selbstreagierende zentrale Radmutteranordnung (100) nach einem der vorhergehenden Ansprüche mit einer zwischen der zentralen Radmutter (110) und der Sicherungsringanordnung (130) ausgebildeten Unterlegscheibe (140).

4. Kombination zum Befestigen von Gegenständen, umfassend:
- eine selbstreagierende, zentrale Radmutteranordnung (100) nach einem der Ansprüche 1-3; und
- eine selbstreagierende zentrale Radmutter-Doppelantriebsanordnung (200) zum Festziehen der selbstreagierenden zentralen Radmutteranordnung (100), wobei die Antriebsanordnung (200) Folgendes umfasst:
∘ eine innere selbstreagierende zentrale Radmutterbuchse (210) und eine äußere selbstreagierende zentrale Radmutterreaktionshülse (220), die über eine Buchsenkupplungseinrichtung (230) miteinander gekoppelt und in entgegengesetzten Richtungen relativ drehbar sind, wobei
∘ die innere selbstreagierende zentrale Radmutterbuchse (210) einen Eingriffsabschnitt aufweist, um nicht drehbar mit dem ersten Ende (111) der zentralen Radmutter (110) der selbstreagierenden zentralen Radmutteranordnung (100) in Eingriff zu kommen, und
∘ die äußere selbstreagierende zentrale Radmutterreaktionshülse (220) einen Reaktionsabschnitt aufweist, um nicht drehbar mit dem ersten Ende (121) des Reaktionsrings (120) der selbstreagierenden zentralen Radmutteranordnung (100) in Eingriff zu kommen.

5. Reaktionsarmfreies Drehmoment-Elektrowerkzeug (300) zum Befestigen einer selbstreagierenden zentralen Radmutteranordnung (100) nach einem der Ansprüche 1 bis 3, wobei das Elektrowerkzeug Folgendes umfasst:
einen Mechanismus zur Erzeugung einer Drehkraft;
einen Antrieb zum Übertragen der Drehkraft; und
eine Kombination zur Befestigung von Gegenständen nach Anspruch 4.

6. Kraftbetriebenes Werkzeug (300) nach Anspruch 5, das entweder elektrisch, hydraulisch oder pneumatisch angetrieben ist.

7. System (400) zum Befestigen von Gegenständen mit:
eine selbstreagierende zentralen Radmutteranordnung (100) nach einem der Ansprüche 1 bis 3; und
ein reaktionsarmfreies Drehmoment-Elektrowerkzeug (300) nach einem der Ansprüche 5 bis 6.

## Revendications

1. Ensemble écrou de roue central à auto-réaction (100) comportant :
un écrou de roue central (110) ;
une bague de réaction (120) ; et
un ensemble collier de verrouillage (130)
l'écrou de roue central (110) présentant une première extrémité (111) destinée à venir en prise de manière non rotative avec une partie d'action d'un ensemble d'entraînement (200) et une seconde extrémité (116) destinée à vernir en prise de manière rotative avec une roue ;
la bague de réaction (120) présentant une première extrémité (121) destinée à venir en prise de manière non rotative avec une partie de réaction d'un ensemble d'entraînement (200) et une seconde extrémité (126) destinée à vernir en prise de manière non rotative avec l'ensemble collier de verrouillage (130) ; et
l'ensemble collier de verrouillage (130) présentant une première extrémité (131) destinée à venir en prise de manière non rotative avec la bague de réaction (120) et une seconde extrémité (136) conique destinée à vernir en prise de manière non rotative avec un évidement conique correspondant au centre de la roue.

2. Ensemble écrou de roue central à auto-réaction (100) selon l'une quelconque des revendications précédentes, dans lequel la bague de réaction (120) est formée entre l'écrou de roue central (110) et l'ensemble collier de verrouillage (130).

3. Ensemble écrou de roue central à auto-réaction (100) selon l'une quelconque des revendications précédentes, comportant une rondelle (140) formée entre l'écrou de roue central (110) et l'ensemble collier de verrouillage (130).

4. Combinaison destinée à la fixation d'objets comportant :
- un ensemble écrou de roue central à auto-réaction (100) selon l'une des revendications 1 à 3 ; et
- un ensemble d'entraînement double pour écrou de roue central à auto-réaction (200) destiné au serrage de l'ensemble écrou de roue central à auto-réaction (100), l'ensemble d'entraînement (200) comportant
∘ une douille intérieure pour écrou de roue central à auto-réaction (210) et un manchon de réaction extérieur pour écrou de roue central à auto-réaction (220), couplés l'un à l'autre et rotatifs l'un par rapport à l'autre dans des directions opposées par le biais d'un moyen de couplage de douille (230),
∘ la douille intérieure pour écrou de roue central à auto-réaction (210) présentant une partie d'action destinée à venir en prise de manière non rotative avec la première extrémité (111) de l'écrou de roue central (110) de l'ensemble écrou de roue central à auto-réaction (100), et
∘ le manchon de réaction extérieur pour écrou de roue central à auto-réaction (220) présentant une partie de réaction destinée à venir en prise de manière non rotative avec la première extrémité (121) de la bague de réaction (120) de l'ensemble écrou de roue central à auto-réaction (100).

5. Outil à couple actionné par une force extérieure (300) sans bras de réaction, destiné à la fixation d'un ensemble écrou de roue central à auto-réaction (100) selon l'une des revendications 1 à 3, l'outil actionné par une force extérieure comportant :
un mécanisme générateur de force de rotation ;
un entraînement destiné à transférer la force de rotation ; et
une combinaison destinée à la fixation d'objets selon la revendication 4.

6. Outil actionné par une force extérieure (300) selon la revendication 5, entraîné de manière électrique, hydraulique ou pneumatique.

7. Système (400) de fixation d'objets comportant :
un ensemble écrou de roue central à auto-réaction (100) selon l'une des revendications 1 à 3 ; et
un outil à couple actionné par une force extérieure (300) sans bras de réaction selon l'une des revendications 5 à 6.
